# EUROPEAN PATENT APPLICATION

(11) **EP 1 768 416 A1**
(43) Date of publication of application: **28.03.2007**
(21) Application number: 05021074.9
(22) Date of filing: 27.09.2005
(51) Int. Cl.: H04N 7/26, H04N 7/50

(54) **Frequency selective video compression and quantization**

(71) Applicant: MATSUSHITA ELECTRIC INDUSTRIAL CO., LTD., Osaka 571-8501 (JP)
(72) Inventor: Wedi, Thomas, Dr., 64823 Gross-Umstadt (DE); Schuur, Bernhard, 55128 Mainz (DE)
(74) Representative: Grünecker, Kinkeldey, Stockmair & Schwanhäusser Anwaltssozietät

(57) **Abstract**

The present invention relates to encoding and decoding of video data with improved coding efficiency. After transforming pixel data into the frequency domain, only a predetermined subset of transform coefficients is scanned and encoded. In this way, prior knowledge about the location of regular-zero transform coefficients can be exploited so as to reduce redundancies in the coded video data. Information about the location of regular-zero coefficients is extracted from the quantization matrix and signaled to the decoder. The decoder decodes the subset of transform coefficients, employs the signaled information about the location of regular-zero coefficients to inverse scan the decoded transform coefficients, and inverse transforms the transform coefficients back into a block of pixels.

## Description

The present invention relates to the compression of video data. Particularly, the present invention relates to a method for compressing and decompressing video data with improved coding efficiency and a corresponding encoder and decoder.

### BACKGROUND OF THE INVENTION

Video data is being adopted in increasing numbers of applications, ranging from video-telephoning and video-conferencing to DVD and digital television. When video data is being transmitted or recorded, a substantial amount of data has to be sent through conventional transmission channels of limited available frequency bandwidth or has to be stored on conventional storage media of limited data capacity. In order to transmit and store digital data on conventional channels/media, it is inevitable to compress or reduce the volume of digital data.

For the compression of video data, a plurality of video encoding standards has been developed. Such video standards are, for instance, ITU-T standards denoted with H.26x and ISO/IEC standards denoted with MPEG-x. The most up-to-date and advanced video encoding standard is currently the standard denoted as H.264/MPEG-4 AVC.

The encoding approach underlying most of these standards consists of the following main stages:
(a) Dividing each individual video frame into blocks of pixels in order to subject each video frame to data compression at a block level.
(b) Decorrelating spatial information of a video frame by transforming each block of video data from the spatial domain into the frequency domain.
(c) Reducing the overall amount of data by quantizing the resulting transform coefficients.
(d) Compressing the remaining data by entropy encoding the quantized transform coefficients.
(e) Exploiting temporal dependencies between blocks of subsequent frames in order to only transmit changes between subsequent frames. This is accomplished by employing a motion estimation/compensation technique.

It is a particular approach of current video coding standards that the image information is transformed from the spatial domain into the frequency domain. Image compression is achieved by representing the image content by only a few frequency components. A natural image content is mostly concentrated in the coefficients of the lower frequency domain. Higher frequency parts, for which the human eye is less sensitive anyway, can thus be removed or quantized in order to lower the amount of data to be coded.

Current video coding standards like MPEG-1, MPEG-2, MPEG-4, H.263 and H.264/AVC use entropy coding to compress the remaining frequency data.

This step comprises scanning the two-dimensional block of quantized transform coefficients in order to convert it to a one-dimensional sequence. Usually a predetermined scan such as the zigzag scan is applied. This scan starts at the lowest frequency coefficient, i.e. the DC-coefficient and is aborted as soon as all non-zero coefficients of the block are scanned. One disadvantage of such a scan is that a lot of zero coefficients are scanned before the last non-zero coefficient is reached.

The thus obtained one dimensional sequence of quantized transform coefficients is compressed to a series of number pairs called run levels. This sequence is coded with binary code words of variable length, based for example on a Huffman code. The code is optimized to assign shorter code words to the most frequent run-level pairs occurring in typical video images. In this way, the entire block of quantized transform coefficients will be encoded.

In many applications, the volume or bandwidth available for storing or transmitting encoded video data is seriously restricted. There is thus the urgent need to compress the video data as far as possible. However, increasing data compression rate by reducing the amount of data by quantizing even more coarsely, inevitably leads to a deterioration of image quality.

### SUMMARY OF THE INVENTION

The aim of the present invention is to provide a method for compressing and decompressing video data with improved data compression rate and image quality.

This is achieved by the features as set forth in the independent claims.

Preferred embodiments are the subject matter of dependent claims.

The conventional method for video data compression is disadvantageous in situations where some of the quantized transform coefficients are zero for several blocks of a video image or are known to be zero for certain reasons. Reasons for these so-called "regular-zero coefficients" can be similarities in motion or in spatial frequency characteristics of several blocks or a specific type of quantization that forces a regular-zero coefficient structure. The conventional coding scheme cannot account for regular-zero coefficients because the entire block of quantized transform coefficients is encoded in any case, including regular and non-regular zero coefficients. Hence, regular-zero coefficients cause redundancy within the coded video signal rendering coding efficiency suboptimal.

It is the particular approach of the present invention to exploit prior knowledge on the transform coefficients by excluding those coefficients that are known to be zero from the scan so as to reduce redundancy within the encoded data and to improve coding efficiency. The remaining coefficients are scanned in a predetermined sequence, resulting in a shorter scan and improved coding efficiency. The prior knowledge on the transform coefficients is derived from the quantization matrix, which is also transmitted to the decoder. The decoder is thus aware of the excluded coefficients and substitutes the non-encoded transform coefficients by predetermined values upon performing the inverse transformation.

According to a first aspect of the present invention, a method for encoding video data is provided. The method transforms pixels of an image area into transform coefficients in the frequency domain, quantizes the transform coefficients according to a quantization matrix, scans transform coefficients and encoded the scanned transform coefficients. In accordance with the quantization matrix, only a subset of the transform coefficients is scanned and encoded. In this way, prior knowledge on the result of the transformation and quantization step is exploited to improve coding efficiency.

According to a further aspect of the present invention, an encoding apparatus for encoding video data of an input image is provided. The encoding apparatus comprises a transformer for transforming pixels of an image area into transform coefficients in the frequency domain, a quantizer for quantizing transform coefficients according to a quantization matrix, a scanner for scanning quantized transform coefficients, and an encoder for encoding the scanned transform coefficients. In accordance with the quantization matrix, only a subset of the transform coefficients is scanned and encoded.

Preferably, the subset of transform coefficients is identified by the quantization matrix. The quantization matrix, which is known to both the encoder and the decoder, can thus serve to identify regular-zero coefficients that are neither scanned nor encoded.

Preferably, the subset of transform coefficients is identified by those elements of the quantization matrix that differ from a predetermined quantization value. Thus transform coefficients that are to be scanned can easily be identified.

Preferably, the quantization matrix is coded into the encoded video data in order to enable the decoder to dequantize the transform coefficients and to identify the transform coefficients that have actually been encoded.

Preferably, the quantization matrix is coded into the encoded video data once for at least two image areas or once for a predetermined number of pictures, frames, fields, slices, macro blocks or blocks. In this way, the gain in coding efficiency can be maximized.

Preferably, the subset of transform coefficients is set to a predetermined subset of transform coefficients and the quantization matrix is altered accordingly. Hence, the transform coefficients that are employed to code the image can be set according to specific coding requirements.

Preferably, those elements of the quantization matrix, that correspond to transform coefficients that are not part of the predetermined subset, are set to a predetermined quantization value. The decoder can thus identify the subset of transform coefficients that have been scanned and encoded.

Preferably, the predetermined subset of transform coefficients is altered at most once every two image areas or once for a predetermined number of pictures, frames, fields, slices, macro blocks or blocks. Thus, the quantization matrix does not has to be signaled to the decoder too frequently and the gain in coding efficiency can be maximized by saving transmission bandwidth or storage capacity.

Preferably, the predetermined subset of transform coefficients is altered in accordance with a predefined sequence of subsets of transform coefficients. In this way, the image can be coded by selectively using only certain frequency components and by updating those components in a systematic manner.

Preferably, the predetermined subset of transform coefficients is set adaptively, for instance adaptively to the image content of the image area, adaptively to the image content of adjacent image areas, or adaptively to the image content of the image area in preceding frames. Thus, the frequency components used to encode the image can be selected depending on the image contents in order to optimize the trade-off between image quality and coding efficiency.

Preferably, the transform coefficients are reordered prior to scanning them. In particular, the reordering replaces transform coefficients that are not part of the predetermined subset of transform coefficients by transform coefficients of the predetermined subset that correspond to higher spatial frequencies. In this way, the scanning is simplified because regular-zero coefficients do not have to be skipped in the scanning process.

According to a further aspect of the present invention, a method for decoding video data is provided. The method decodes encoded transform coefficients, inverse scans decoded transform coefficients into a two-dimensional array of transform coefficients, dequantizes the two-dimensional array of transform coefficients according to a quantization matrix, and inverse transforms the two-dimensional array of transform coefficients from the frequency domain into pixels of an image area. The decoded transform coefficients form a subset of the two-dimensional array of transform coefficients in accordance with the quantization matrix. Hence, the method complements the two-dimensional array of transform coefficients with a predetermined transform value.

According to a further aspect of the present invention, a decoding apparatus for decoding video data is provided. The decoding apparatus comprises a decoder for decoding encoded transform coefficients, an inverse scanner for inverse scanning decoded transform coefficients into a two-dimensional array of transform coefficients, a dequantizer for dequantizing the two-dimensional array of transform coefficients according to a quantization matrix, and an inverse transformer for inverse transforming the two-dimensional array of transform coefficients from the frequency domain into pixels of an image area. The decoded transform coefficients form a subset of the two-dimensional array of transform coefficients in accordance with the quantization matrix. Hence, the decoding apparatus further comprises a complementing means for complementing the two-dimensional array of transform coefficients with a predetermined transform value.

Preferably, the subset of transform coefficients is identified by the quantization matrix, in particular by those elements of the quantization matrix that differ from a predetermined quantization value. Regular-zero coefficients that arise from the quantization of transform coefficients can thus easily be identified.

Preferably, the quantization matrix is decoded from the video data. The quantization matrix may thus be altered by the encoder in order to optimize the trade-off between image quality and data compression ratio.

Preferably, decoding the quantization matrix is performed once for at least two image areas or once for a predetermined number of pictures, frames, fields, slices, macro blocks or blocks in order to reduce processing overhead while decoding the video data.

Preferably, complementing the two-dimensional array of transform coefficients comprises filling the two-dimensional array with the predetermined transform value and overwriting the predetermined transform value in the two-dimensional array with the values of the inverse scanned transform coefficients upon inverse scanning the decoded transform coefficients. Complementing the two-dimensional array of transform coefficients is thus simplified since there is no need to track the transform coefficients that have been decoded and those that have to be set to the predetermined transform value.

Alternatively, complementing the two-dimensional array of transform coefficients may comprise complementing the decoded transform coefficients with the predetermined transform value to form a complemented set of transform coefficients. The complemented set of transform coefficients can thus be inverse scanned into the two-dimensional array without keeping track of transform coefficients that have been decoded and those that have to be set to the predetermined transform value.

Preferably, the predetermined transform value is zero. This is the most natural choice for transform coefficients that have not been encoded. This choice simplifies the whole decoding process.

Preferably, the image area is a block of pixels, and wherein an image is divided into a plurality of blocks of a uniform size. Splitting the image into image areas upon encoding and assembling the image from decoded image areas is thus simplified.

The above and other objects and features of the present invention will become more apparent from the following description and preferred embodiments given in conjunction with the accompanying drawings, in which:
- Fig.1: schematically illustrates in block diagram form a configuration of a conventional hybrid video encoder,
- Fig. 2: shows an example for a zigzag scan of a block of quantized transform coefficients,
- Fig.3: schematically illustrates in block diagram form the configuration of a conventional hybrid video decoder,
- Fig. 4a: shows an example for a zigzag scan with non-zero coefficients distributed over the block,
- Fig. 4b: shows an example for a zigzag scan with all non-zero coefficients concentrated in the upper left corner of the block,
- Fig. 5: illustrates the effective scan according to an embodiment of the present invention,
- Fig. 6: illustrates the reordering of transform coefficients according to another embodiment of the present invention,
- Fig. 7a: illustrates the default quantization matrix of the AVC/H.264 standard,

- Fig. 7b: is an example of the quantization matrix according to an embodiment of the present invention,
- Fig. 8: is a flow chart illustrating the process of compressing video data in accordance with the present invention,
- Fig. 9: is a block diagram illustrating the signaling of regular-zero coefficients according to a preferred embodiment of the present invention, and
- Fig. 10: is a flow chart illustrating the process of decoding video data in accordance with the present invention.

### DETAILED DESCRIPTION

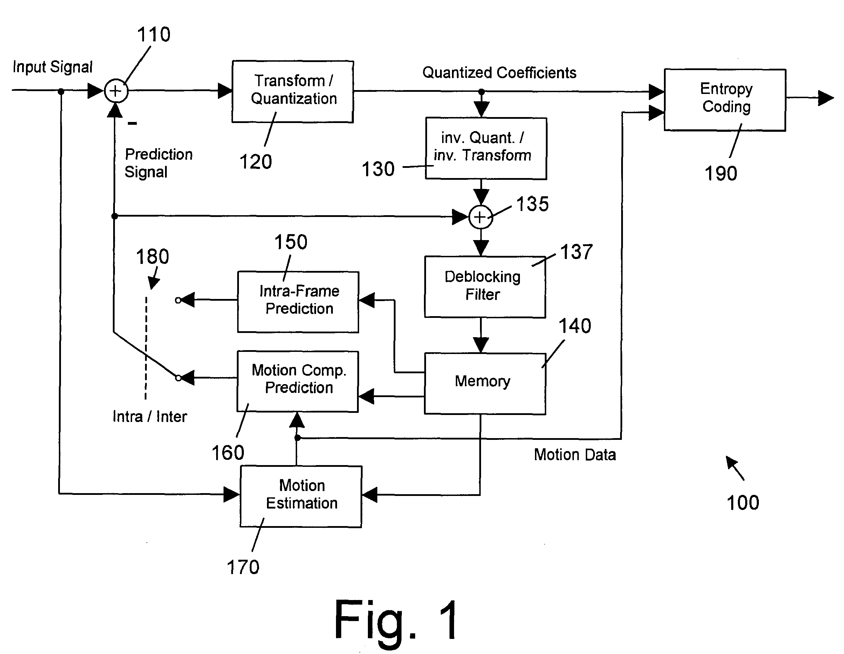

Referring to Fig. 1, an example of a hybrid video encoder is illustrated. The video encoder, generally denoted by reference numeral 100, comprises a subtractor 110 for determining differences between a current block of a video image (input signal) and a prediction signal of the current block which is based on previously encoded blocks stored in memory 140. A transform and quantization unit 120 transforms the resulting prediction error from the spatial domain to the frequency domain and quantizes the obtained transform coefficients. An entropy coding unit 190 entropy encodes the quantized transform coefficients.

In accordance with the H.264 / AVC standard, the input image is divided into macro blocks. The encoder 100 employs a Differential Pulse Code Modulation (DPCM) approach which only transmits differences between blocks of an input video sequence and their predictions based on previously encoded blocks ("the locally decoded image"). These differences are determined in subtractor 110, which receives the blocks to be encoded in order to subtract the prediction signal therefrom.

The locally decoded image is provided by a decoding unit incorporated into video encoder 100. The decoding unit performs the encoding steps in reverse manner. An inverse quantization and inverse transform unit 130 dequantizes the quantized coefficients and applies an inverse transform to the dequantized coefficients. In adder 135, the decoded differences are added to the prediction signal to form the locally decoded image. Further, a deblocking filter 137 reduces blocking artifacts in the decoded image.

The type of prediction that is employed by video encoder 100 depends on whether the macro blocks are encoded in "Intra" or "Inter" mode. In "Intra" mode the video encoding standard H.264/AVC uses a prediction scheme based on already encoded macro blocks of the same image in order to predict subsequent macro blocks. In "Inter" mode, motion compensation/prediction between corresponding blocks of several consecutive frames is employed.

Only Intra-encoded images (I-type images) can be decoded without reference to any previously decoded image. The I-type images provide error resilience for the encoded video sequence. Further, entry points into bit streams of encoded data are provided by the I-type images in order to enable a random access, i.e. to access I-type images within the sequence of encoded video images. A switch between Intra-mode, i.e. a processing by Intra-frame prediction unit 150, and Inter-mode, i.e. a processing by motion compensation prediction unit 160, is controlled by Intra/Inter switch 180.

In "Inter" mode, a macro block is predicted from corresponding blocks of previous frames by employing motion compensation. The estimation is accomplished by a motion estimator unit 170, receiving the current input signal and the locally decoded image. Motion estimation yields two-dimensional motion vectors, representing a pixel displacement between the current block and the corresponding block in previous frames. Based on the estimated motion, a motion compensation prediction unit 160 provides a prediction signal.

For both the "Intra" and the "Inter" encoding mode, the differences between the current and the predicted signal are transformed into transform coefficients by transform / quantization unit 120. Generally, an orthogonal transform such as a two-dimensional Discrete Cosine Transform (DCT) or an integer version thereof is employed.

The transform coefficients are quantized in order to reduce the amount of data that has to be encoded. The step of quantization is controlled by quantization tables that specify the precision and therewith the number of bits that are used to encode each frequency coefficient. Lower frequency components are usually more important for image quality than fine details so that more bits are spend for coding the low frequency components than for the higher ones.

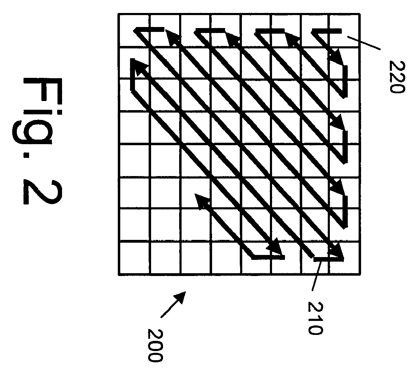

After quantization, the two-dimensional array of transform coefficients has to be converted into a one dimensional string to pass it to the entropy encoder. This conversion is done by scanning the array in a predetermined sequence. An example is the zigzag scan 210 shown in Fig. 2. This scan starts at the lowest frequency coefficient 220, i.e. the DC-component, and is aborted as soon as all non-zero coefficients of the array 200 are scanned.

The thus obtained one dimensional sequence of quantized transform coefficients is compressed to a series of number pairs called run levels. The first number ("run length of zeros") within each run level represents the number of zero coefficients between the last two non-zero coefficients in the sequence. The second number within each run level is the value of the next non-zero coefficient. For example, the sequence of quantized transform coefficients 2 1 0 0 0 4 0 0 6 3 0 0 5 0 0 ... 0 results in the run-level sequence (0, 2) (0, 1) (3, 4) (2, 6) (0, 3) (2, 5) (EOB). The end-of-block (EOB) symbol indicates that all of the remaining coefficients are zero.

Finally, the run-level sequence is coded with binary code words of variable length (Variable Length Code, VLC). The code is optimized to assign shorter code words to most frequent run-level pairs occurring in typical video images. The resulting bitstream is multiplexed with the motion information and stored on a recording medium or transmitted to the decoder side.

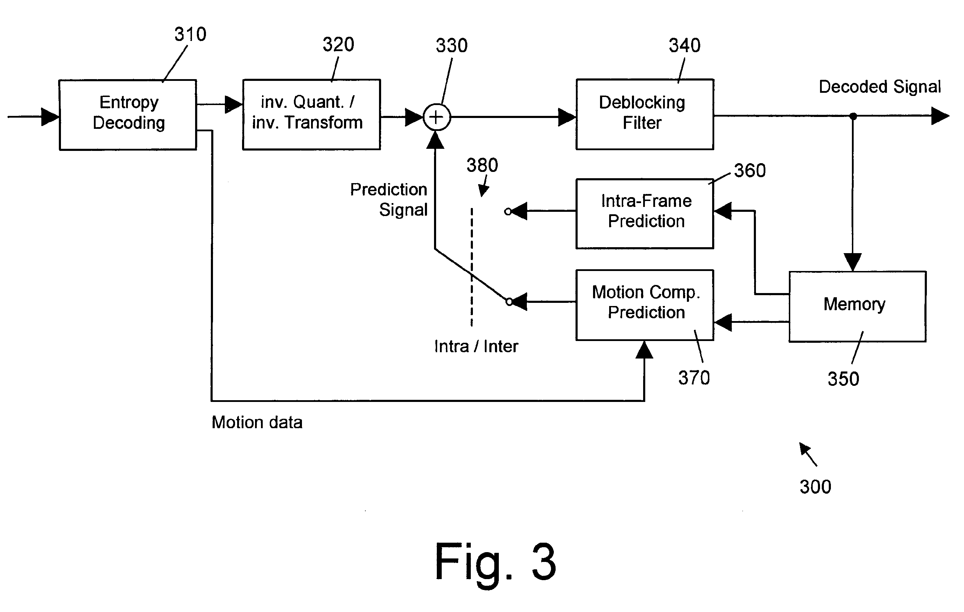

For reconstructing the encoded images at the decoder side, the encoding process is applied in reverse manner. A schematic block diagram, illustrating the configuration of the corresponding decoder, is shown in Fig. 3.

In decoder 300 of Fig. 3, first the entropy encoding of transform coefficients and motion data is reversed in an entropy decoding unit 310. This step also involves an inverse scanning in order to convert the sequence of decoded transform coefficients into a two-dimensional block of data as it is required for the inverse transformation. The decoded block of transform coefficients is then submitted to an inverse quantizer and inverse transformer 320 and the decoded motion data is sent to a motion compensation prediction unit 370. The result of the inverse transform contains prediction differences and is added by adder 330 to the prediction signal stemming from the motion compensation prediction unit 370 in Inter-mode or stemming from an Intra-frame prediction unit 360 in Intra-mode. The reconstructed image may be passed through a deblocking filter 340 and the decoded signal is stored in memory 350 to be applied to prediction units 360, 370.

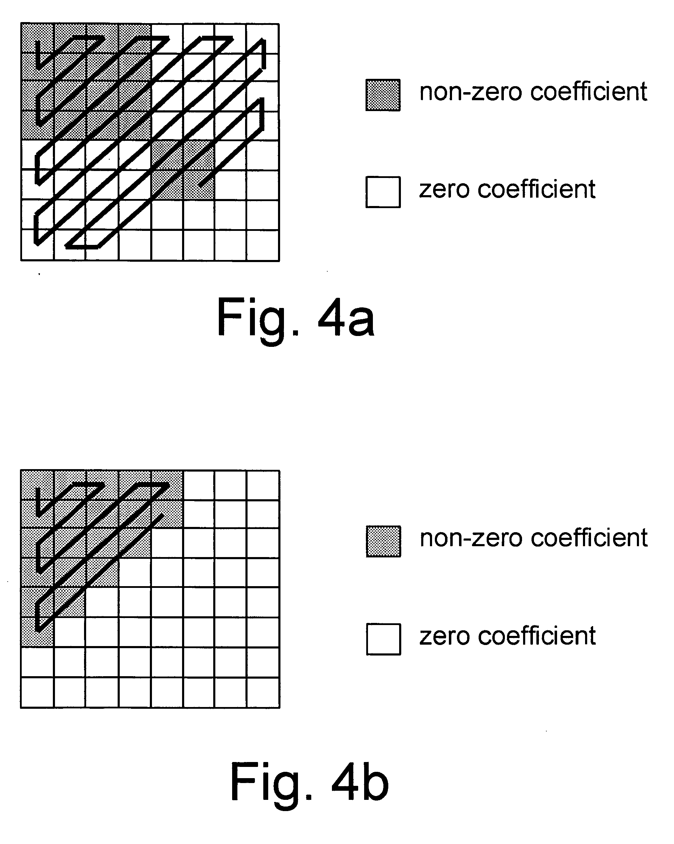

The coding efficiency of the above coding approach used in current video coding standard like MPEG-1, MPEG-2, MPEG-4, H.263, H.264/AVC highly depends on the amount of non-zero transform coefficients to be encoded. The number of non-zero coefficients depends on the picture content of the respective macro block of the residual frame and on the applied quantization. However, coding efficiency also depends on the distribution of the non-zero transform coefficients within the block. If the non-zero coefficients are distributed as shown in Fig 4a, then a lot of zero coefficients have to be scanned before the last non-zero coefficient is reached. On the other hand, if all non-zero coefficients were concentrated in the upper left triangle of the block, no zero coefficients have to be scanned and the scan can be aborted well before the whole block is scanned (cf. Fig 4b).

Small image content changes between subsequent images are often reflected by a large number of quantized high frequency transform coefficients, but only result in hardly perceivable image quality improvements in the reconstructed image. Such minor changes are almost not noticeable for the human eye and the compression of the video data can be increased by suppressing a certain subset of transform coefficients, i.e. by setting these coefficients to zero, without adversely affecting the resulting image quality.

Maintaining only individual frequency components from the frequency domain while suppressing the remaining frequency components of the transformed image area may lead to zero coefficients that have the same location within several blocks. These regular-zero coefficients may occur within different blocks of the same frame or within the same block of consecutive frames.

Regular-zero coefficients may also arise from effects other than said suppression of frequency components. For example, several blocks adjacent in space or time may have a similar frequency characteristics leading to zero coefficients at the same location within each block. Further, several blocks may have similar motion characteristics and thus similar prediction errors so that zeros of the corresponding transform coefficients show up at the same location within each block.

It is the particular approach of the present invention to exploit any form of prior knowledge on the transform coefficients by excluding the regular-zero coefficients from the scan so as to improve coding efficiency. Non-regular coefficients, i.e. non-zero coefficients and zero coefficients that are not regularly zero, are scanned in a predetermined sequence, resulting in a shorter scan and improved coding efficiency. The decoder is aware of the regular-zero coefficients and substitutes the non-encoded transform coefficients by predetermined values upon performing the inverse transformation.

The underlying principle of scanning a subset of transform coefficients of the present invention is not limited to the described hybrid encoding systems. The present invention can be applied to all kinds of encoders employing transform coefficients.

Quantized transform coefficients are divided into two categories, namely into regular-zero coefficients and non-regular coefficients. Regular-zero coefficients are coefficients that are known to be zero anyway by virtue of prior knowledge. Non-regular coefficients are those for which no prior knowledge is available. Non-regular coefficients thus consist of non-zero coefficients and coefficients that happen to be zero, i.e., non-regular zero coefficients.

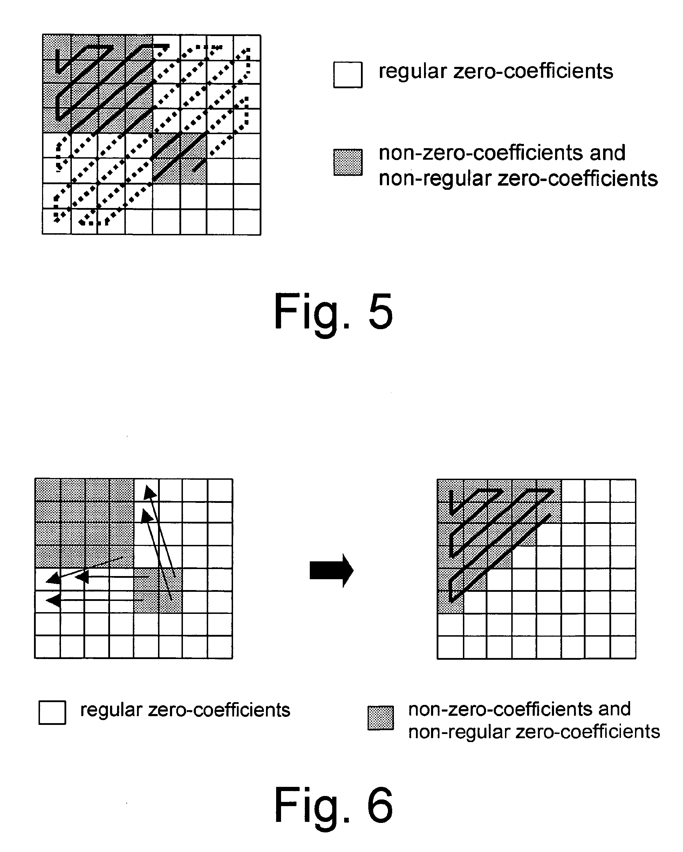

An exemplary implementation of the present invention is illustrated in Fig. 5. The dashed line indicates that the coefficients, which are identified as regular-zero coefficients are discarded, i.e. not scanned and not coded. Thus, the effective scan (solid line in Fig. 5) is shorter, the number of coefficients that have to be coded is reduced, and the coding efficiency is improved.

According to an alternative embodiment of the present invention the number of scanned coefficients is reduced by reordering the coefficients prior to scanning. Figure 6 visualizes the reordering process in which regular-zero coefficients are replaced by higher-frequency non-regular coefficients. Preferably, the reordering is performed in such a way that scanning the reordered coefficients yields the same result as scanning the non-regular coefficients and skipping the regular-zero coefficients as described above. After reordering, all transform coefficients can be scanned irrespectively of the division into regular-zero and non-regular coefficients.

In the example shown in Fig. 6, zigzag scan is used. Since all regular-zero coefficients are concentrated in the lower right corner of the block, the scan is aborted at the latest when all the non-regular coefficients have been scanned. Since some of those may still be non-regular zero coefficients, the scan may be aborted even earlier. However, even if all non-regular zero coefficients have to be scanned, no end-of-block symbol is required to indicate that the remaining coefficients equal zero because this information is already implicit in the regular-zero property. In any case, the effective scan (solid line in Fig. 6) is shorter, the number of coefficients that have to be coded is reduced, and the coding efficiency is improved.

Although the general approach is illustrated here exemplarily by the zigzag scan, the present invention is not limited to a specific scan. The present invention can be applied to encoders using any scanning scheme.

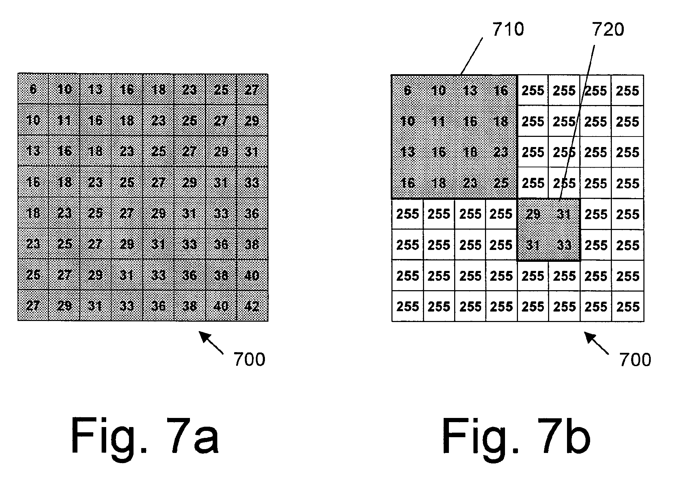

Regular-zero coefficients can arise from a particular choice of the quantization matrix. Figure 7a shows the default quantization matrix (700) for the AVC/H.264 standard. The eight-by-eight quantization matrix consists of 64 quantization values, each of which is used to quantize the corresponding transform coefficient by dividing the transform coefficient by the quantization value and taking the integer part of the result. Thus, large quantization values lead to coarse quantization of the transform coefficients. As can be seen in Fig. 7a, the quantization values increase from the upper left to the lower right elements of the quantization matrix. Hence, transform coefficients that correspond to high spatial frequencies are quantized more coarsely than transform coefficients at lower spatial frequencies.

Figure 7b shows an example of a quantization matrix with the elements of the unshaded region set to 255. Hence, the corresponding transform coefficients will be coarsely quantized and can be excluded from the scanning and encoding step in order to improve coding efficiency. Only the shaded low-frequency block 710 and the shaded part 720 of the high-frequency components will be scanned and encoded.

It is to be noted that the given numbers are only exemplary and that the present invention can be applied to encoders and decoders using any range of transform coefficients and any range of quantization values. Further, the present invention is not restricted to any specific size of the quantization matrix, the size of the image area, or the number of transform coefficients.

It is a particularly important feature of the present invention that transform coefficients, that are quantized by a predetermined quantization value - such as 255 in case that quantization values are 8bit unsigned integers - are considered by both the encoder and the decoder as regular-zero coefficients. This convention introduces a one-to-one relationship between the quantization matrix and the set of regular-zero coefficients. Thus, full information on the set of regular-zero coefficients can be deduced from the quantization matrix. The decoder, which has to be informed on the quantization matrix anyway, can hence use this information to decode the video data.

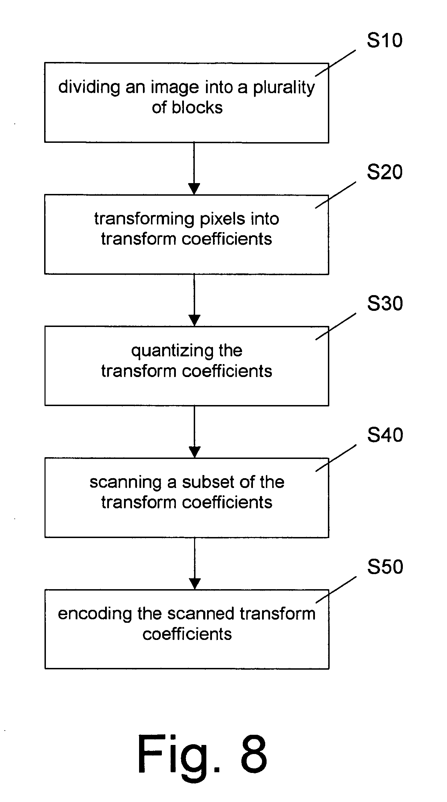

The operation of the encoder in accordance with the present invention is described next in connection with the example in Fig. 8.

Figure 8 is a flowchart illustrating the operation of an encoder in accordance with the present invention. After dividing a video image to be encoded into a plurality of blocks (step S10), the pixels of a block are transformed into a block of transform coefficients (step S20). Alternatively, image areas of a different size or the undivided image is supplied to the transformation stage. Preferably, an orthogonal transform like a DCT or an integer version thereof is applied. He present invention, however, is not restricted to any specific choice of the transform and may be applied to encoders using any transform.

The transform coefficients are quantized as indicated by step S30. From the transform coefficients, a subset of the transform coefficients is scanned (step S40). As described in connection with Figs. 5 and 6, the scanning process may be performed in accordance with different embodiments. In particular, the scanning process can account for the existence of regular-zero coefficients in order to obtain shorter scans and an improved coding efficiency.

Only the scanned transform coefficients are encoded in step S50. The encoding result is transmitted to a decoder or is stored on a storage medium.

In order to enable the decoder to perform the inverse scanning upon decoding the signal, information on the applied scan and/or reordering step has to be transmitted by the encoder to the decoder. In particular, the decoder has to be informed on the subset of transform coefficients that have been encoded and on the spatial frequency to which each of them corresponds. This information can be deduced by the decoder from its knowledge about regular-zero coefficients.

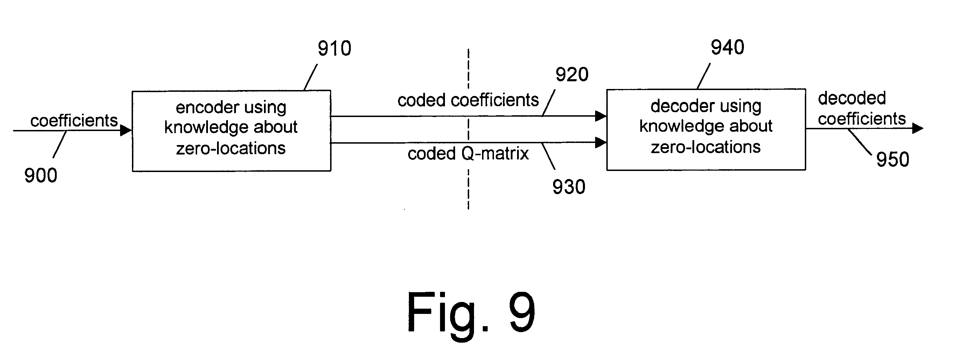

Figure 9 illustrates a preferred embodiment of the present invention, where information on the regular-zero locations is signaled to the decoder. This signaling may occur, for instance, once per sequence, per picture, per frame, per field, per slice, per master block or once per a predetermined number thereof. By virtue of the signaled information, the decoder is able to reconstruct the effective scan that has been applied by the encoder, invert the scan, and decode the transform coefficients.

In the preferred implementation shown in Fig. 9, the quantization matrix (Q-matrix) is employed to signal the location of regular-zero coefficients. The quantization matrix specifies for each transform coefficient 900 the step size used for quantization. A predetermined step size, such as for example 255, implies that the corresponding transform coefficient is regarded as a regular-zero coefficient. Consequently, this transform coefficient will neither be scanned nor encoded. The quantization matrix can be transmitted to the decoder together with other picture information data. In the AVC/H.264 standard, the quantization matrix can be altered on the image level. Setting the "scaling_matrix_present_flag" indicates that 64 8bit values of the quantization matrix will follow. The decoder 940 can employ the quantization matrix 930 to deduce which transform coefficients 900 were not scanned and encoded, thus reconstructing the effective scan employed by the encoder 910. Hence, the decoder can invert the effective scan, decode the subset of transform coefficients 920, and substitute the non-decoded transform coefficients yielding a full set of decoded transform coefficients 950.

The implementation of Fig. 9 can also be used to restrict the spatial frequencies that are employed to encode a given image area. This is achieved by explicitly setting elements of the quantization matrix, that correspond to transform coefficients that are to be suppressed, to the predetermined quantization value, e.g. to 255. The suppressed transform coefficients are thus marked as regular-zero coefficients and will not be scanned and encoded at all. In this manner, the amount of data to be encoded can further be reduced and coding efficiency improved.

This method provides control over the subset of transform coefficients that are actually employed to encode the video images. Hence, this subset can also be set adaptively to the image content or according to any prior knowledge of the result of the step of transforming. For example, this subset can also be set according to the result of the transformation of previously encoded image areas either within the same frame or within preceding frames. This subset could also be altered in accordance to a predetermined sequence of subsets of transform coefficients. Altering the subset can occur, for instance, once per sequence, per picture, per slice, or even on macro block level.

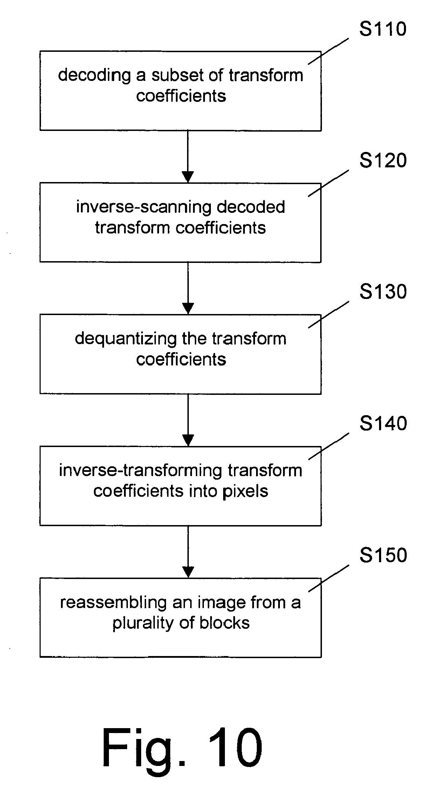

The operation of the decoder in accordance with the present invention is described next in connection with the example in Fig. 10.

Figure 10 is a flowchart illustrating the operation of a decoder in accordance with the present invention. After decoding a subset of transform coefficients in step S110, the decoded transform coefficients are inverse scanned and non-decoded transform coefficients are substituted by predetermined values (step S120). As described above, the information on the scan applied by the encoder is signaled to the decoder by means of the quantization matrix. The decode deduces the set of regular-zero coefficients from the quantization matrix elements that equal the predetermined quantization value. With that information, the decoder can assign the decoded transform coefficients to the correct frequency component.

The transform coefficients are dequantized as indicated in step S130. In step S140 an inverse transform is applied in order to transform the block of transform coefficients into a block of pixels. Finally, in step S150 the image is reassembled from the corresponding plurality of blocks. The image data is either displayed or stored on a storage medium.

Summarizing, the present invention relates to encoding and decoding of video data with improved coding efficiency. After transforming pixel data into the frequency domain, only a predetermined subset of transform coefficients is scanned and encoded. In this way, prior knowledge about the location of regular-zero transform coefficients can be exploited so as to reduce redundancies in the coded video data. Information about the location of regular-zero coefficients is extracted from the quantization matrix and signaled to the decoder. The decoder decodes the subset of transform coefficients, employs the signaled information about the location of regular-zero coefficients to inverse scan the decoded transform coefficients, and inverse transforms the transform coefficients back into a block of pixels.

## Claims

1. A method for encoding video data, including the steps of
transforming pixels of an image area into transform coefficients in the frequency domain,
quantizing transform coefficients according to a quantization matrix,
scanning quantized transform coefficients, and
encoding the scanned transform coefficients
**characterized in that**
in accordance with the quantization matrix, only a subset of the transform coefficients is scanned and encoded.

2. A method according to claim 1 wherein the subset of transform coefficients is identified by the quantization matrix.

3. A method according to claim 2 wherein the subset of transform coefficients is identified by those elements of the quantization matrix that differ from a predetermined quantization value.

4. A method according to any of claims 1-3 further comprising the step of coding the quantization matrix into the encoded video data.

5. A method according to claim 4 wherein the step of coding the quantization matrix is performed once for at least two image areas.

6. A method according to claim 4 wherein the step of coding the quantization matrix is performed once for a predetermined number of pictures, frames, fields, slices, macro blocks or blocks.

7. A method according to any of claims 1-6 further comprising the step of setting the subset of transform coefficients to a predetermined subset of transform coefficients and altering the quantization matrix accordingly.

8. A method according to claim 7 wherein those elements of the quantization matrix, that correspond to transform coefficients that are not part of the predetermined subset, are set to a predetermined quantization value.

9. A method according to claim 7 or 8 wherein the predetermined subset of transform coefficients is altered at most once every two image areas.

10. A method according to claim 7 or 8 wherein the predetermined subset of transform coefficients is altered once for a predetermined number of pictures, frames, fields, slices, macro blocks or blocks.

11. A method according to claim 7 or 8 wherein the predetermined subset of transform coefficients is altered in accordance with a predefined sequence of subsets of transform coefficients.

12. A method according to claim 7 or 8 wherein the predetermined subset of transform coefficients is set adaptively.

13. A method according to claim 7 or 8 wherein the predetermined subset of transform coefficients is set adaptively to the image content of the image area.

14. A method according to claim 7 or 8 wherein the predetermined subset of transform coefficients is set adaptively to the image content of adjacent image areas.

15. A method according to claim 7 or 8 wherein the predetermined subset of transform coefficients is set adaptively to the image content of the image area in preceding frames.

16. A method according to any of claims 1-15 further comprising the step of reordering the transform coefficients.

17. A method according to claim 16 wherein the reordering step replaces transform coefficients that are not part of the predetermined subset of transform coefficients by transform coefficients of the predetermined subset that correspond to higher spatial frequencies.

18. A method for decoding video data, including the steps of
decoding encoded transform coefficients,
inverse scanning decoded transform coefficients into a two-dimensional array of transform coefficients,
dequantizing the two-dimensional array of transform coefficients according to a quantization matrix, and
inverse transforming the two-dimensional array of transform coefficients from the frequency domain into pixels of an image area,
**characterized in that**
the decoded transform coefficients form a subset of the two-dimensional array of transform coefficients in accordance with the quantization matrix, and
by the step of complementing the two-dimensional array of transform coefficients with a predetermined transform value.

19. A method according to claim 18 wherein the subset of transform coefficients is identified by the quantization matrix.

20. A method according to claim 19 wherein the subset of transform coefficients is identified by those elements of the quantization matrix that differ from a predetermined quantization value.

21. A method for decoding video data according to any of claims 18-20 further comprising the step of decoding the quantization matrix from the video data.

22. A method for decoding video data according to claim 21 wherein the step of decoding the quantization matrix is performed once for at least two image areas.

23. A method for decoding video data according to claim 21 wherein the step of decoding the quantization matrix is performed once for a predetermined number of pictures, frames, fields, slices, macro blocks or blocks.

24. A method for decoding video data according to any of claims 18-23 wherein the step of complementing the two-dimensional array of transform coefficients comprises the substep of filling the two-dimensional array with the predetermined transform value, and
wherein inverse scanning the decoded transform coefficients comprises overwriting the predetermined transform value in the two-dimensional array with the values of the inverse scanned transform coefficients.

25. A method for decoding video data according to any of claims 18-23 wherein the step of complementing the two-dimensional array of transform coefficients comprises the substep of complementing the decoded transform coefficients with the predetermined transform value to form a complemented set of transform coefficients and
wherein the complemented set of transform coefficients is inverse scanned into the two-dimensional array.

26. A method for decoding video data according to any of claims 18-25 wherein the predetermined transform value is zero.

27. A method according to any of claims 1-26, wherein said image area is a block of pixels, and wherein an image is divided into a plurality of blocks of a uniform size.

28. An encoding apparatus for encoding video data, comprising
a transformer for transforming pixels of an image area into transform coefficients in the frequency domain,
a quantizer for quantizing transform coefficients according to a quantization matrix,
a scanner for scanning quantized transform coefficients, and
an encoder for encoding the scanned transform coefficients
**characterized in that**
in accordance with the quantization matrix, only a subset of the transform coefficients is scanned and encoded.

29. An encoding apparatus according to claim 28 further comprising an identifying means for identifying the subset of transform coefficients by the quantization matrix.

30. An encoding apparatus according to claim 29 wherein the identifying means is identifying the subset of transform coefficients by those elements of the quantization matrix that differ from a predetermined quantization value.

31. An encoding apparatus according to any of claims 28-30 further comprising a multiplexer for multiplexing the quantization matrix with the encoded video data.

32. An encoding apparatus according to claim 31 wherein the multiplexer is multiplexing the quantization matrix with the encoded video data once for at least two image areas.

33. An encoding apparatus according to claim 31 wherein the multiplexer is multiplexing the quantization matrix with the encoded video data once for a predetermined number of pictures, frames, fields, slices, macro blocks or blocks.

34. An encoding apparatus according to any of claims 28-33 further comprising a setting means for setting the subset of transform coefficients to a predetermined subset of transform coefficients and altering the quantization matrix accordingly.

35. An encoding apparatus according to claim 34 wherein the setting means is setting those elements of the quantization matrix, that correspond to transform coefficients that are not part of the predetermined subset, are to a predetermined quantization value.

36. An encoding apparatus according to claim 34 or 35 wherein the predetermined subset of transform coefficients is altered at most once every two image areas.

37. An encoding apparatus according to claim 34 or 35 wherein the predetermined subset of transform coefficients is altered once for a predetermined number of pictures, frames, fields, slices, macro blocks or blocks.

38. An encoding apparatus according to claim 34 or 35 wherein the predetermined subset of transform coefficients is altered in accordance with a predefined sequence of subsets of transform coefficients.

39. An encoding apparatus according to claim 34 or 35 wherein the predetermined subset of transform coefficients is set adaptively.

40. An encoding apparatus according to claim 34 or 35 wherein the predetermined subset of transform coefficients is set adaptively to the image content of the image area.

41. An encoding apparatus according to claim 34 or 35 wherein the predetermined subset of transform coefficients is set adaptively to the image content of adjacent image areas.

42. An encoding apparatus according to claim 34 or 35 wherein the predetermined subset of transform coefficients is set adaptively to the image content of the image area in preceding frames.

43. An encoding apparatus according to any of claims 28-42 further comprising a reordering means for reordering the transform coefficients.

44. An encoding apparatus according to claim 43 wherein the reordering means replaces transform coefficients that are not part of the predetermined subset of transform coefficients by transform coefficients of the predetermined subset that correspond to higher spatial frequencies.

45. A decoding apparatus for decoding video data, comprising
a decoder for decoding encoded transform coefficients,
an inverse scanner for inverse scanning decoded transform coefficients into a two-dimensional array of transform coefficients,
a dequantizer for dequantizing the two-dimensional array of transform coefficients according to a quantization matrix, and
an inverse transformer for inverse transforming the two-dimensional array of transform coefficients from the frequency domain into pixels of an image area,
**characterized in that**
the decoded transform coefficients form a subset of the two-dimensional array of transform coefficients in accordance with the quantization matrix, and
by a complementing means for complementing the two-dimensional array of transform coefficients with a predetermined transform value.

46. A decoding apparatus according to claim 45 further comprising an identifying means for identifying the subset of transform coefficients by the quantization matrix.

47. A decoding apparatus according to claim 46 wherein the identifying means is identifying the subset of transform coefficients by those elements of the quantization matrix that differ from a predetermined quantization value.

48. A decoding apparatus for decoding video data according to any of claims 45-47 further comprising a quantization matrix decoder for decoding the quantization matrix from the video data.

49. A decoding apparatus for decoding video data according to claim 48 wherein the quantization matrix decoder is decoding the quantization matrix once for at least two image areas.

50. A decoding apparatus for decoding video data according to claim 48 wherein the quantization matrix decoder is decoding the quantization matrix once for a predetermined number of pictures, frames, fields, slices, macro blocks or blocks.

51. A decoding apparatus for decoding video data according to any of claims 45-50 wherein the complementing means fills the two-dimensional array with the predetermined transform value, and
wherein the inverse scanner is overwriting the predetermined transform value in the two-dimensional array with the values of the inverse scanned transform coefficients.

52. A decoding apparatus for decoding video data according to any of claims 45-50 wherein the complementing means complements the decoded transform coefficients with the predetermined transform value to form a complemented set of transform coefficients, and
wherein the inverse scanner is inverse scanning the complemented set of transform coefficients into the two-dimensional array.

53. A decoding apparatus for decoding video data according to any of claims 45-52 wherein the predetermined transform value is zero.

54. An apparatus according to any of claims 28-53, wherein said image area is a block of pixels, and wherein an image is divided into a plurality of blocks of a uniform size.
